# EUROPÄISCHE PATENTSCHRIFT

(11) **EP 0 991 707 B1**
(45) Veröffentlichungstag und Bekanntmachung des Hinweises auf die Patenterteilung: **12.09.2001**
(21) Anmeldenummer: 98934987.3
(22) Anmeldetag: 20.06.1998
(51) Int. Cl.: C08K 3/00, A47K 3/04, C08G 18/08

(54) **VERFAHREN ZUR HERSTELLUNG VON PLATTEN ODER FORMTEILEN SOWIE PLATTENFÖRMIGES HALBZEUG UND RAUMAUSSTATTUNGSGEGENSTÄNDE, DIE NACH DEM VERFAHREN HERGESTELLT WORDEN SIND**
METHOD FOR PRODUCING TILES OR SHAPED PARTS, AND TILE-SHAPED SEMI-FINISHED PRODUCTS AND INTERIOR DECORATING ITEMS MADE ACCORDING TO SAID METHOD
PROCEDE DE FABRICATION DE PANNEAUX OU DE PIECES MOULEES ET PRODUIT SEMI-FINI SOUS FORME DE PANNEAU ET ARTICLES D'AMENAGEMENT INTERIEUR, PRODUITS D'APRES LEDIT PROCEDE

(30) Priorität: 23.06.1997 DE 19726502
(43) Veröffentlichungstag der Anmeldung: 12.04.2000
(73) Patentinhaber: Silbernagel, Peter, 48607 Ochtrup (DE)
(72) Erfinder: Silbernagel, Peter, 48607 Ochtrup (DE)
(74) Vertreter: Hoffmeister, Helmut, Dr. Dipl.-Phys.
(86) Internationale Anmeldenummer: EP9803775
(87) Internationale Veröffentlichungsnummer: WO9858994

(56) Entgegenhaltungen:
- EP-A- 0 321 264
- WO-A-93/23236
- GB-A- 2 264 083
- DATABASE WPI Week 9651 Derwent Publications Ltd., London, GB; AN 513722 XP002078138 "decorate product produce bathtub " A & JP 08 267483 A (SEKISUI CHEM IND) 15. Oktober 1996

## Beschreibung

Die Erfindung betrifft plattenförmiges Halbzeug und Raumausstattungsgegenstände, beispielsweise Duschtassen, Fensterbänke, Fassaden-, Boden- und Wandplatten.

Kunststofformteile aus Kunstharzen, wie Polyester-, Epoxid- oder Polyisocyanatharzen, letztere bekannt auch als Polyurethane, werden häufig zwecks Erhöhung von Gewicht, Temperaturbeständigkeit, Oberflächengüte oder Versteifung mit fein gemahlenen mineralischen Füllstoffen angemischt. Der die Eigenschaften verbessernde beziehungsweise verändernde mineralische Füllstoff besteht beispielsweise aus Kreide, Kalkstein, Marmor; die Hauptbestandteile dieser Stoffe sind demnach Calciumcarbonat (CaCO₃). Der Anteil an Füllstoffen, bezogen auf das Gesamtgewicht einer Platte, zum Beispiel Calciumcarbonat in einer PVC-Matrix, beträgt höchstens etwa 40 Gew% (vergleiche Fachbuch "Werkstoffkunde Kunststoff", Verfasser G. Menges, Carl Hanser Verlag München, 1990, Diagramm S. 148).

Oberhalb dieser Grenze verschlechtern sich die Elastizitätsmodul-Werte. Ferner ist festzustellen, daß Calciumcarbonat beim Erwärmen auf Temperaturen oberhalb 30°C als brüchiges Aragonit modifiziert.

Es ist auch bekannt, zur Herstellung von Stützkernen für Verbundplatten, ausgenommen PUR-Hartschaumplatten, einen anderen Füllstoff, nämlich Quarzsand oder -mehl zu verwenden. Hierzu ist der Füllstoff-Anteil aus ähnlichen Gründen begrenzt. Quarzmehl ist höchst korrosionsbeständig, aber abrasiv, auβerdem weist es stets Anteile mit Korndurchmessern unter 5 *µ*m auf. Die kleinen Teilchen bilden gesundheitsschädlichen, silicogenen Feinstaub. Es sind daher strikte Unfallverhütungsvorschriften bei der Bearbeitung zu beachten. Es fällt jedoch der vorgenannte Feinstaub in großer Menge bei der Massenherstellung von Steinerzeugnissen an. Eine Weiterverwertung dieses "Abfalls" ist daher von großer Wichtigkeit.

Aus der GB 2 264 083 A ist eine Duschtasse bekannt, bei der eine dünne Hautschicht, insbesondere eine aus einer Kunststofffolie gebildete, mit einem Gemisch aus Polyurethan und einem hohen Anteil an mineralischen Füllstoffen hinterschäumt wird. In einer geschlossenen Form steigt der Druck durch das bei der Urethanbildung abgespaltene Gas so weit, dass die Hautschicht an die Forminnenseite angedrückt wird und sich ein massiver Schaumkörper ausbildet, der an einer Seite mit der Hautschicht bedeckt ist. Die Hautschicht ist selbst jedoch nicht tragfähig, und Druckkräfte werden unmittelbar auf den Schaumkörper übertragen. Das Aussehen des so gebildeten Raumausstattungsgegenstandes entspricht einem durch die außenliegende Kunststofffolie als Hautschicht massiven Kunststoffkörper.

Es stellt sich die Aufgabe, eine Naturstein-Verbundplatte, wie Küchenarbeits- und Bauverkleidungsplatte, oder Einrichtungsgegenstände, wie Duschtassen oder Fensterbänke, anzugeben, deren Natursteinschicht oder Substratschicht relativ dünn ist und deren Trägerschicht so eingefärbt und angepaßt werden kann, daß ein weitgehend einheitliches Bild, insbesondere an den Seitenkanten, erzielbar ist.

Diese Aufgabe wird gelöst durch ein plattenförmiges Halbzeug zur Herstellung von Bauverkleidungs-, Tisch-, Ablage-, Küchenarbeitsplatten, oder einen Raumausstattungsgegenstand, beispielsweise Duschtasse, Heizelement oder Fensterbank, mit einem Aufbau gemäß den Merkmalen des Anspruchs 1 oder 2.

Als besonders vorteilhaft hat sich erwiesen, daß das fertige Produkt, wie Küchenarbeits- oder Verkleidungsplatte, das aus einer relativ dünnen Natursteinplatte und einer Trägerschicht besteht, eine erwünschte größere Elastizität und Biegefestigkeit, aber auch ein deutlich verkleinertes Gesamtgewicht aufweist. Das Gesamtgewicht läßt sich um etwa 40 bis 66 % gegenüber einer aus Marmor oder Granit bestehenden Platte verkleinern.

Von großem Vorteil ist auch, daß sich das Gemisch aus Polyurethan-Ausgangsstoffen und Zusatzstoffen bei der Verarbeitung mit Substraten, Trägerschichten und ähnlichem verbinden läßt, ohne daß grundsätzlich zusätzliche Klebstoffschichten eingesetzt werden müssen. Insbesondere ist vorteilhaft, wenn in einem In-mold-Verfahren das in der beheizten Form aufgeschäumte Gemisch gießtechnisch mit einer Natursteinplatte, beispielsweise aus Granit oder Marmor, oder mit einem aus Metall oder Holzwerkstoff bestehenden Substrat verbunden wird. Damit wird erreicht, daß ein weitgehend chemisch resistentes Steinimitat mit einer Art Furnier verbunden werden kann, wobei vom Gewicht und vom Farbton her die Platte oder das Werkstück insgesamt kaum von einer massiven Platte unterschieden werden kann.

Unter Anwendung einfacher Formen, Matrizen/Patrizen oder In-Mold-Formungsverfahren lässt sich eine Mannigfaltigkeit von Platten und Formteilen herstellen, bei denen vom Gewicht sowie von den mechanischen Eigenschaften her eine vorteilhafte und arbeitsplatzgesicherte Verarbeitung möglich ist. Es lassen sich Rohstoffe einsetzen, die relativ preiswert herstellbar sind (Polyurethan) und auch solche, die praktisch als "Abfallstoffe" zur Verfügung stehen, nämlich als Recyclingmaterial anfallendes Quarzmehl und/oder pulverisierter getrockneter Steinschleifschlamm, der bei der Verarbeitung von Natursteinen anfällt und derzeit mit Kosten entsorgt werden muß.

Die Färbungen der Quarzteile sowie des Steinschleifschlamms richten sich nach den zur Verarbeitung gelangenden Natursteinen. Es sind schwarz-, rot- oder graugefärbte Quarzmehle und Steinschleifschlämme bekannt, so daß jeweils angepaßt an eine gewünschte Farbstellung das Steinimitat eingefärbt werden kann. Als Füllmittel eignet sich weiterhin auch fein gemahlenes Silicatglas, das ebenfalls gefärbt und ungefärbt als Recyclingmaterial anfällt und verarbeitet werden kann.

Das Substrat kann auch auf der dem Schaumkunststoff zugewandten Seite reliefiert sein, so daß eine noch innigere Verbindung zwischen den beiden Stoffen gegeben ist.

Soll eine besonders innige Verbindung hergestellt werden, so wird vorgeschlagen, daß zwischen der Natursteinschicht und der Steinimitatschicht eine mit einem Klebstoff getränkte Verstärkungsmatte eingebaut ist, die vorzugsweise ein Textil-, Metall- oder Glasfasergewebe oder Glasfaservlies ist.

Die verwendete Natursteinplatte sollte eine Dicke zwischen 4 und 20 mm, vorzugsweise zwischen 10 und 14 mm, aufweisen.

Weitere mechanische Möglichkeiten sind, in der Trägerschicht Ausnehmungen oder Halterungen für mechanische Verankerungen einzuarbeiten oder in wenigstens einem Kantenbereich des Halbzeugs bzw. des Gegenstandes Leisten aus Naturstein, Holz, Glas oder Metall anzusetzen, die sowohl das Aussehen verbessern als auch Stoßbelastungen aufnehmen können.

Auch ist es möglich, in die Trägerschicht Rohrleitungen, elektrisch leitende Kabel, elektrische Heizelemente und/oder Befestigungsvorrichtungen einzubinden, um in einem Fertigungsgang ein fertiges Produkt, beispielsweise einen Heizkörper zu erhalten. Dieser kann heißwasserführende Rohre aufweisen, er kann aber auch mit elektrischen Heilelementen versehen sein. Aufgrund des Einbindens der Elemente in die elektrisch gut isolierende Steinimitatschicht ist sogar eine parallele Ausrüstung eines Heizkörpers mit Heißwasserleitungen und elektrischen Heizelementen ohne Gefahr denkbar.

Ausführungsbeispiele der Erfindung werden nachfolgend anhand von Beispielen und Figuren beschrieben.

Die Figuren zeigen im einzelnen:
- Fig. 1: einen Teil eines plattenförmigen Halbzeugs, hergestellt nach dem Verfahren gemäß Erfindung;
- Fig. 2: eine Kante einer Küchenarbeitsplatte;
- Fig. 3: eine muldenförmige Duschtasse, ebenfalls hergestellt nach dem Verfahren;
- Fig. 4: einen nach dem Verfahren hergestellten Heizkörper.

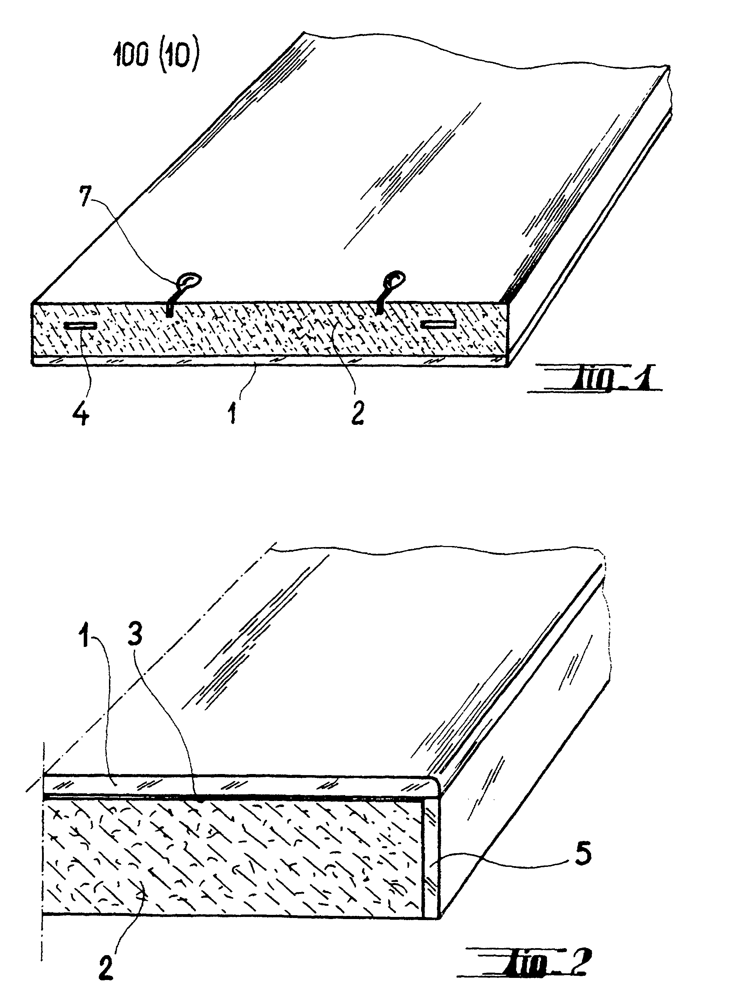

### Beispiel 1 (vgl. Fig. 1)

20 kg eines Polyisocyanates werden mit 20 kg eines feinkörnigen Quarzmehles einer Teilchensiebgröße zwischen 1,0 und 25 µm homogen vermischt. Diesem Gemisch wird ein Härter (Polyol) in ausreichender und nach Herstellerangaben angemessener Menge zugefügt. Die Masse wird in eine beheizte Form und dort zum Aufschäumen gebracht. Das Gemisch erfährt durch die Aufschäumung in der beheizten Form einen Druck von 10 MPa, dabei wird die Bläschengröße des Schaumstoffes relativ klein gehalten, so daß nach dem Ausschäumen und Aushärten das Gemisch eine Dichte von etwa 1800 kg/m³ bekommt.

Die so hergestellte Steinimitatschicht 2 wird mit Hilfe einer Polyurethan-Klebstoffschicht mit einer 10 mm dicken Granitschicht (Matursteinschicht 1) aus dunkel gefärbtem Granit fest verbunden.

### Beispiel 2

In eine beheizte Schäumform wird eine Platte (Natursteinschicht 1) aus hellem rot gefärbten Porphyrgranit eingelegt. Dem Polyisocyanat gemäß Beispiel 1 wird eine Menge von 8 kg Steinschleifschlamm in rötlicher Färbung beigemischt und der Härter (Polyol) hinzugefügt. Das Aufschäumen geschieht in der Form, in die bereits die Steinplatte eingelegt ist. Das aufschäumende Material verbindet sich innig mit der Rückseite der Steinplatte und bildet einen ähnlich gefärbten Verbund aus geschäumtem Material und furnierartiger Steinplatte. Es wird dabei das Gemisch über eine Zeit von 25 Minuten mit einem Druck von 12 MPa behandelt, der durch die Aufschäumung ausgeübt wird.

### Beispiel 3

Einer Menge von 20 kg Polyisocyanat werden 3 kg helles Quarzmehl und 3 kg fein gemahlenes weißes Silicatglas beigemischt. Ferner wird dem Gemisch als flammhemmender Füllstoff ein Aluminiumhydroxyderivat in einer Menge von 0,5 kg beigefügt.

Vor dem Zufügen des Härters wird eine homogene Mischung hergestellt. Dieser Mischung wird der Härter (Polyol) hinzugefügt. Das Ausschäumen vollzieht sich in einer Form, in der eine auf der Rückseite durch Sandstrahl aufgerauhte Alabaster-Platte eingelegt ist. Das Steinimitatmaterial verbindet sich innig mit der aufgerauhten Fläche des Alabasters und bildet einen Schichtstoff, wie er in Fig. 1 dargestellt ist.

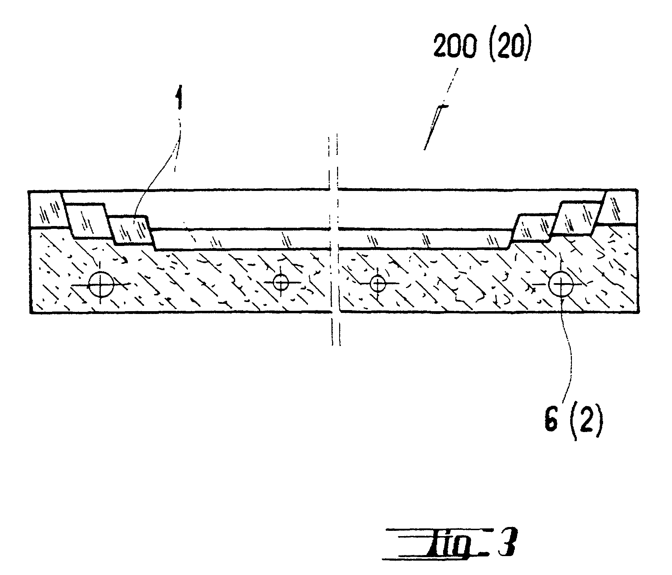

### Beispiel 4 (vgl. Fig. 2)

Zur Herstellung einer Waschtischablage wird ein Gemisch aus 10 kg Polyisocyanat und 10 kg trockener, gemahlener Steinschleifschlamm aus dunklem Granit beigefügt. In einer Schäumform wird unter Druck dieses Material in-mold mit einer schwarzen, auf ihrer Rückseite teilweise unpolierten Granitplatte (Natursteinschicht 1) verbunden. Es ergibt sich durch die identische Färbung des Schleifmehls und der aufgelegten Platte 1 ein sehr gleichmäßiges und einheitliches Aussehen des Halbzeuges. Dieses Aussehen wird dadurch noch verbessert, daß in die Form zusätzlich noch eine Kantenleiste 5 aus demselben Material wie die Deckschicht aufgelegt wird.

Die Konstruktion ist dadurch noch versteift, daß zwischen Natursteinschicht 1 und Steinimmitatschicht 2 eine mit einem aushärtenden, klebenden Kunststoff getränkte Verstärkungsmatte 3 als Armierung eingebaut ist. Eine solche Verstärkungsmatte 3 kann auch noch als zusätzliche Versteifung auf der Unterseite der Steinimitatschicht 3 angebracht sein. Als Material für die Verstärkungsmatte 3 eignet sich beispielsweise Glasfasergewebe oder -vlies, ein Textilgewebe oder -gewirke, ein Metallgitter oder ein Kunststoffvlies.

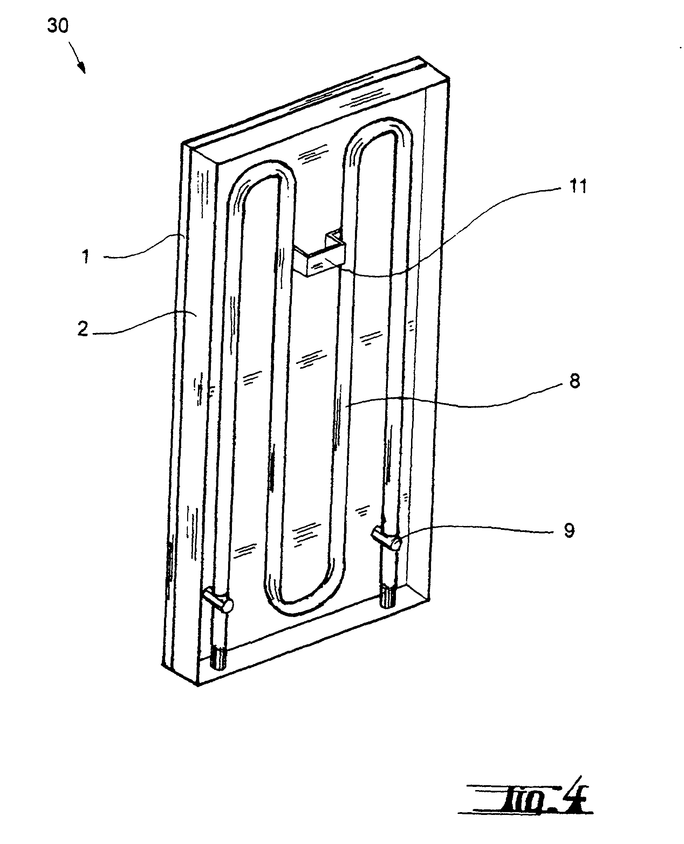

### Beispiel 5 (vgl. Fig. 3)

Zur Herstellung einer Duschtasse 20 wird eine treppenartige Konfiguration eines geschlossenen Granitbeckens aus einzelnen Teilen erzeugt, die in gestülpt liegender Form mit einem ausschäumenden Polyurethan-Schaumkunststoff der Zusammensetzung 10 kg Polyisocyanat mit 10 kg Kunststeinmehl, gewonnen aus Granitsägemehl, beigemischt werden, dem vor dem Aufschäumen noch ein Polyol zugemischt wird.

In der Form bildet sich eine Rückenschicht 6, die sich mit allen Teilen des Granites sehr stark verbindet und auch stärkste Wäremeschwankungen übersteht.

Der besondere Vorteil bei der Herstellung derartiger Gegenstände gemäß Fig. 3 ist es, daß das Material der Steinimitatschicht 2 auch eine hohe Wärmedämmung hat, die wesentlich größer ist als die des Steinmaterials in reiner Form, so daß sich die Duschtasse nicht "fußkalt" anfühlt.

### Beispiel 6 (vgl. Fig. 4)

Zur Herstellung eines plattenförmigen Heizkörpers (Heizplatte 30) wird in eine beheizbare Form (nicht dargestellt) eine 10mm dicke Granitplatte eingelegt. Ein langes Metallrohr 8 mit Nenndurchmesser 12 mm und 1 mm Wandstärke wird mäanderförmig gebogen und über Abstandshalter 9 so über der Granitplatte gelagert, daß kein direkter Kontakt von Rohr zur Granitplatte besteht. Ein Haltebügel 11 kann in die Form mit eingebracht werden.

Ein Polyisocyanat wird mit 30 Gew.-% eines feinkörnigen Quarzmehles homogen vermischt. Diesem Gemisch wird ein Härter (Polyol) in ausreichender und nach Herstellerangaben angemessener Menge zugefügt.

Die Masse wird in die beheizte Form und dort durch Heizen der Form zum Aufschäumen gebracht. Dabei bildet sich ein quaderförmiger Körper 2 aus, der hier zur Verdeutlichung durchsichtig dargestellt ist. Die Bläschengröße des Schaumstoffes so gehalten, daß nach dem Ausschäumen und Aushärten das Gemisch eine Dichte von etwa 200 bis 400 kg/m³ aufweist. Die Dicke der Steinimitatschicht 2, d.h. des quaderförmigen Körpers 2, beträgt 30 mm.

Der besondere Vorteil bei der Herstellung einer derartigen Heizplatte 30 gemäß Fig. 4 ist es, daß über die Steinimitatschicht eine gute Wärmeleitung in die Natursteinplatte ermöglicht ist, welche die Wärme in Form von Strahlungswärme in einen Wohnraum oder dergleichen abgibt. Zum anderen ist der Wärmeübergang zu der den Heizkörper umgebenden Luftschicht reduziert, wodurch der Anteil konvektiver Wärmeabgabe der Heizplatte 30 vermindert ist. Das so erhaltene Raumklima wird gegenüber dem durch Konvektor-Heizkörper erzeugten als angenehmer empfunden.

## Patentansprüche

1. Plattenförmiges Halbzeug (10) zur Herstellung von Bauverkleidungs-, Tisch-, Ablage-, Küchenarbeitsplatten, mit folgendem Aufbau:
- eine Natursteinschicht (1) oder eine Substratschicht aus Metall oder Holzwerkstoff als Furnier,
- eine Steinimitatschicht (2) mit einer Dichte zwischen 80 kg/m³ und 2000 kg/m³, die mit der Natursteinschicht (1) fest verbunden ist und die sich aus einer Mischung aus Polyurethanschaumstoff und Füllmitteln in einer Menge von 40 bis 80 Gew.-%, bezogen auf die Endmasse des fertigen Schaumkunststoffes, zusammensetzt, wobei das Füllmittel wenigstens teilweise aus als Recyclingmaterial anfallendem Quarzmehl, gemahlenem Silicatglas oder/und aus pulverisiertem, getrocknetem Steinschleifschlamm besteht und eine Teilchensiebgröße zwischen 1,0 und 250 *µ*m aufweist.

2. Raumausstattungsgegenstand, beispielsweise Duschtasse (20), Heizelement (30) oder Fensterbank, mit folgendem Aufbau:
- eine Natursteinschicht (1) oder eine Substratschicht aus Metall oder Holzwerkstoff als Sichtschicht,
- eine Steinimitatschicht (2) mit einer Dichte zwischen 80 kg/m³ und 2000 kg/m³, die mit der Natursteinschicht (1) fest verbunden ist und die sich aus einer Mischung aus Polyurethanschaumstoff und Füllmitteln in einer Menge von 40 bis 80 Gew.-%, bezogen auf die Endmasse des fertigen Schaumkunststoffes, zusammensetzt, wobei das Füllmittel wenigstens teilweise aus als Recyclingmaterial anfallendem Quarzmehl, gemahlenem Silicatglas oder/und aus pulverisiertem, getrocknetem Steinschleifschlamm besteht und eine Teilchensiebgröße zwischen 1,0 und 250 *µ*m aufweist.

3. Platte oder Raumausstattungsgegenstand nach Anspruch 1 oder 2, **dadurch gekennzeichnet, dass** die Natursteinschicht oder die Substratschicht auf der dem Schaumkunststoff zugewandten Seite reliefiert ist.

4. Platte oder Raumausstattungsgegenstand nach einem der Ansprüche 1 bis 3, **dadurch gekennzeichnet, dass** zwischen der Natursteinschicht (1) bzw. zwischen der Substratschicht und der Steinimitatschicht (2) eine mit einem Klebstoff getränkte Verstärkungsmatte (3) eingebaut ist.

5. Platte oder Raumausstattungsgegenstand nach Anspruch 4, **dadurch gekennzeichnet, dass** die Verstärkungsmatte (3) ein Textil-, Metall- oder Glasfasergewebe oder Glasfaservlies ist.

6. Platte oder Raumausstattungsgegenstand nach einem der Ansprüche 1 bis 5, **dadurch gekennzeichnet, dass** in der Trägerschicht (2) Ausnehmungen (4) für mechanische Verankerungen oder Metallanker (7) eingearbeitet sind.

7. Platte oder Raumausstattungsgegenstand nach einem der Ansprüche 1 bis 6, **dadurch gekennzeichnet, dass** die Natursteinplatte aus Granit, Marmor oder Alabaster besteht.

8. Platte oder Raumausstattungsgegenstand nach einem der Ansprüche 1 bis 7, **dadurch gekennzeichnet, dass** die Natursteinplatte eine Dicke zwischen 4 und 20 mm, vorzugsweise zwischen 10 und 14 mm, aufweist.

9. Platte oder Raumausstattungsgegenstand nach einem der Ansprüche 1 bis 8, **dadurch gekennzeichnet, dass** in wenigstens einem Kantenbereich des Halbzeugs bzw. des Gegenstandes Leisten (5) aus Naturstein, Holz, Glas oder Metall angesetzt sind.

10. Platte oder Raumausstattungsgegenstand nach einem der Ansprüche 1 bis 9, **dadurch gekennzeichnet, dass** in die Trägerschicht (2) Rohrleitungen (8) und/oder elektrisch leitende Kabel und/oder elektrische Heizelemente und/oder Befestigungsvorrichtungen (Sicherungsbügel 11; Abstandshalter 9) eingebunden sind.

## Claims

1. Tile-shaped semi-finished product (10) for manufacturing tiles for facing buildings and for tables, surfaces and kitchen work-tops, having the following construction:
■ a natural stone layer (1) or substrate layer of metal or wooden material as a veneer,
■ an imitation stone layer (2) with a density of between 80 kg/m³ and 2000 80 kg/m³, which is firmly joined to the natural stone layer (1) and which is composed of a mixture of polyurethane foam and fillers in a quantity of 40 to 80 % by weight relative to the final mass of the finished foam plastics material, the filler consisting at least partly of powdered quartz occurring as a recycled material, ground silicate glass and/or powdered, dried stone grinding sludge and has a particle filter size of between 1.0 and 250 µm.

2. Room equipment article, e.g. a shower tray (20), heating element (30) or windowsill, having the following construction:
■ a natural stone layer (1) or substrate layer of metal or wooden material as a veneer,
■ an imitation stone layer (2) with a density of between 80 kg/m³ and 2000 80 kg/m³, which is firmly joined to the natural stone layer (1) and which is composed of a mixture of polyurethane foam and fillers in a quantity of 40 to 80 % by weight relative to the final mass of the finished foam plastics material, the filler consisting at least partly of powdered quartz occurring as a recycled material, ground silicate glass and/or powdered, dried stone grinding sludge and has a particle filter size of between 1.0 and 250 *µ*m.

3. Tile or room equipment article according to claim 1 or 2, **characterised in that** the natural stone layer or substrate layer is in relief on the side associated with the foam plastics material.

4. Tile or room equipment article according to one of claims 1 to 3, **characterised in that** between the natural stone layer (1) or between the substrate layer and the imitation stone layer (2) is fitted a reinforcing matting (3) impregnated with adhesive.

5. Tile or room equipment article according to claim 4, the reinforcing matting (3) is a textile, metal or fibreglass woven or non-woven fabric.

6. Tile or room equipment article according to one of claims 1 to 5, **characterised in that** in the carrier layer (2) recesses (4) are formed for mechanical fixings or metal fixings (7).

7. Tile or room equipment article according to one of claims 1 to 6, **characterised in that** the natural stone tile consists of granite, marble or alabaster.

8. Tile or room equipment article according to one of claims 1 to 7, **characterised in that** the natural stone tile has a thickness of between 4 and 20 mm, preferably between 10 and 14 mm.

9. Tile or room equipment article according to one of claims 1 to 8, **characterised in that** in at least one edge region of the semi-finished product or article strips (5) of natural stone, wood, glass or metal are provided.

10. Tile or room equipment article according to one of claims 1 to 9, **characterised in that** ducts (8) and/or electrically conductive cables and/or electric heating elements and/or fixing devices (fixing shackle 11; spacer 9) are incorporated in the carrier layer (2).

## Revendications

1. Produit semi-fini (10) en forme de panneau pour la fabrication de panneaux de construction de couverture, de plans de table, de tablettes et de plans de travail de cuisine, présentant la construction suivante :
- une couche en pierre naturelle (1) ou une couche de substrat en métal ou en un matériau dérivé du bois comme placage,
- une couche aspect pierre (2) d'une densité comprise entre 80 kg/m³ et 2000 kg/m³, qui est reliée de manière fixe à la couche en pierre naturelle (1) et se compose d'un mélange de mousse de polyuréthane et de charges dans une proportion de 40 à 80% en poids rapportée à la masse finale de la matière plastique cellulaire finie, la charge étant constituée au moins en partie de poudre de quartz de recyclage, de verre au silicate broyé ou/et de cambouis de meulage de pierre séché et pulvérisé et présentant une taille de particules comprise entre 1,0 et 250 µm.

2. Article d'aménagement intérieur, par exemple receveur de douche (20), élément de chauffage (30) ou appui de fenêtre, présentant la construction suivante :
- une couche en pierre naturelle (1) ou une couche de substrat en métal ou en un matériau dérivé du bois comme couche décorative,
- une couche aspect pierre (2) d'une densité comprise entre 80 kg/m³ et 2000 kg/m³, qui est reliée de manière fixe à la couche en pierre naturelle (1) et se compose d'un mélange de mousse de polyuréthane et de charges dans une proportion de 40 à 80% en poids rapportée à la masse finale de la matière plastique cellulaire finie, la charge étant constituée au moins en partie de poudre de quartz de recyclage, de verre au silicate broyé ou/et de cambouis de meulage de pierre séché et pulvérisé et présentant une taille de particules comprise entre 1,0 et 250 µm.

3. Panneau ou article d'aménagement intérieur selon la revendication 1 ou 2, **caractérisé en ce que** la couche en pierre naturelle ou la couche de substrat comporte un relief sur le côté tourné vers la matière plastique cellulaire.

4. Panneau ou article d'aménagement intérieur selon l'une des revendications 1 à 3, **caractérisé en ce qu'**un mat de renfort (3) imprégné d'une colle est inséré entre la couche de pierre naturelle (1) ou la couche de substrat et la couche aspect pierre (2).

5. Panneau ou article d'aménagement intérieur selon la revendication 4, **caractérisé en ce que** le mat de renfort (3) est un tissu textile, métallique ou de fibres de verre ou un voile en fibres de verre.

6. Panneau ou article d'aménagement intérieur selon l'une des revendications 1 à 5, **caractérisé en ce que** des évidements (4) pour des fixations mécaniques ou des ancrages métalliques (7) sont aménagés dans la couche support (2).

7. Panneau ou article d'aménagement intérieur selon l'une des revendications 1 à 6, **caractérisé en ce que** la plaque en pierre naturelle est en granite, en marbre ou en albâtre.

8. Panneau ou article d'aménagement intérieur selon l'une des revendications 1 à 7, **caractérisé en ce que** la plaque en pierre naturelle a une épaisseur comprise entre 4 et 20 mm, de préférence entre 10 et 14 mm.

9. Panneau ou article d'aménagement intérieur selon l'une des revendications 1 à 8, **caractérisé en ce que** des bandes de chant (5) en pierre naturelle, en bois, en verre ou en métal sont rapportées sur au moins un bord du produit semi-fini ou de l'article.

10. Panneau ou article d'aménagement intérieur selon l'une des revendications 1 à 9, **caractérisé en ce que** des conduites (8) et/ou des câbles électriques et/ou des éléments de chauffage électriques et/ou des dispositifs de fixation (étrier de fixation 11 ; dispositifs d'écartement 9) sont intégrés dans la couche support (2).
